# FASCICULE DE BREVET EUROPEEN

(11) **EP 1 592 159 B1**
(45) Date de publication et mention de la délivrance du brevet: **25.04.2007**
(21) Numéro de dépôt: 05290811.8
(22) Date de dépôt: 13.04.2005
(51) Int. Cl.: H04J 14/02, H04L 12/44, H04J 3/16, H04B 10/213

(54) **Réseau de transmission optique en arbre**
Optisches Übertragungsnetz mit Baumstruktur
Optical transmission network with tree structure

(30) Priorité: 21.04.2004 FR 0450742
(43) Date de publication de la demande: 02.11.2005
(73) Titulaire: Alcatel Lucent, 75008 Paris (FR)
(72) Inventeur: Dotaro, Emmanuel, 91370 Verrières le Buisson (FR); Le Sauze, Nicolas, 91440 Bures-sur-Yvette (FR)
(74) Mandataire: Fournier, Michel Robert Marie

(56) Documents cités:
- US-A- 5 343 314
- US-A1- 2003 016 692
- US-A1- 2003 063 843
- PATENT ABSTRACTS OF JAPAN vol. 0154, no. 65 (E-1138), 26 novembre 1991 (1991-11-26) & JP 03 201838 A (NEC CORP), 3 septembre 1991 (1991-09-03)

## Description

L'invention se situe dans le domaine des réseaux de transmission à liaisons optiques. Elle concerne plus particulièrement les réseaux optiques adaptés à des dimensions géographiques relativement limitées, telles que les réseaux d'accès ou métropolitains.

D'une façon générale, un réseau optique est constitué d'une pluralité de stations susceptibles d'émettre et de recevoir des signaux optiques à destination et en provenance d'autres stations du réseau. Ces échanges d'informations s'effectuent au moyen de liaisons optiques auxquelles sont connectés des noeuds d'accès qui desservent respectivement ces stations.

Pour exploiter la capacité en bande passante des liaisons optiques, on utilise avantageusement le multiplexage en longueurs d'onde, habituellement appelé "WDM" (de l'anglais "Wavelength Division Multiplexing").

Par ailleurs, si le réseau est de taille suffisamment limitée, on peut éviter de prévoir des dispositifs de régénération individuelle des canaux. Un tel réseau qui est alors dit "transparent" peut toutefois comporter des amplificateurs optiques disposés pour amplifier simultanément les canaux des multiplex WDM transmis. Si de plus le réseau ne comporte aucun amplificateur en ligne, il est dit "passif".

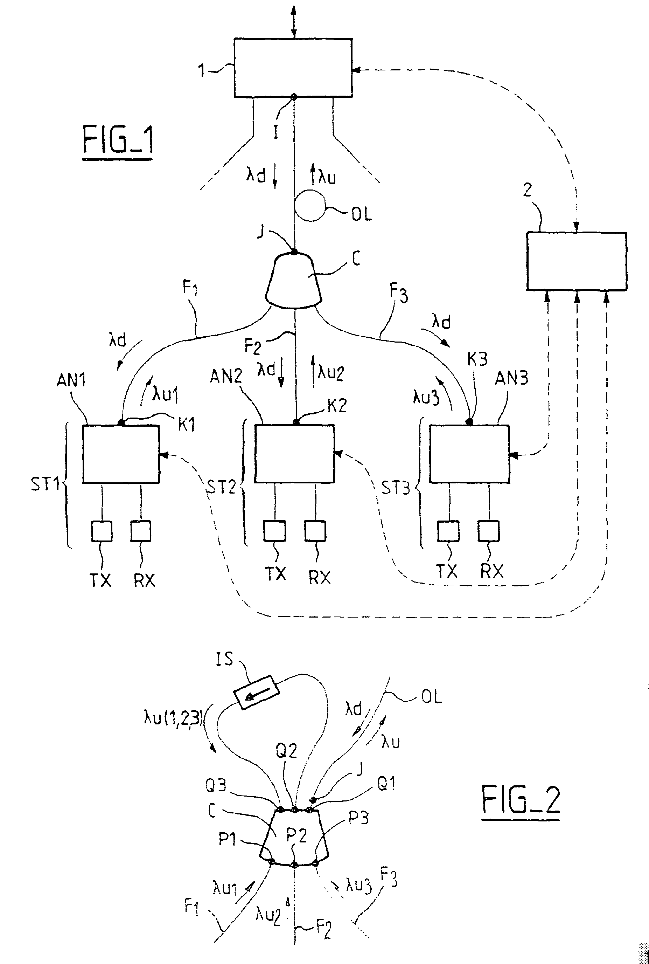

L'invention s'applique indifféremment aux types de réseaux mentionnés ci-dessus, dans le cas particulier où il possède une configuration en arbre. Pour simplifier l'exposé, un exemple de tel réseau est représenté schématiquement à la figure 1 dans sa réalisation la plus simple, c'est-à-dire sous la forme d'un réseau transparent passif et mono-longueur d'onde pour chaque sens de propagation des signaux.

Selon cet exemple, le réseau comporte trois stations ST1-ST3 prévues chacune pour émettre vers un concentrateur 1 (parfois appelé "Hub" ou encore "OLT" pour "Optical Line Terminal" en anglais) par l'intermédiaire d'un arbre d'interconnexion optique reliant des points d'émission K1-K3 respectifs des stations à un même point de réception I du concentrateur. L'arbre est constitué de liaisons optiques comprenant d'une part des liaisons d'accès dédiées F1-F3 reliant les points d'émission K1-K3 des stations à des entrées respectives d'un coupleur C, et d'autre part une liaison commune OL ayant une première extrémité couplée au point de réception I et une seconde extrémité J reliée à une sortie du coupleur C.

Dans leur réalisation la plus économique, les liaisons d'accès F1-F3 et la liaison commune OL sont de simples fibres, mais pour de longues distances des liaisons munies d'amplificateurs peuvent être plus appropriées.

Pour échanger des signaux entre le concentrateur et les stations, on peut exploiter la propriété des liaisons de pouvoir propager les signaux selon deux sens de propagation opposés : le sens dit "montant" depuis les stations vers le concentrateur et le sens dit "descendante" depuis le concentrateur vers les stations. Dans ce cas, les points d'émission K1-K3 et le point de réception I constituent aussi respectivement des points de réception et un point d'émission. Dans la suite, nous décrirons un réseau de ce type, bien que l'invention puisse s'appliquer aussi à des réseaux où les trafics montant et descendant sont véhiculés par des liaisons séparées.

Pour communiquer avec les stations, le concentrateur comporte au moins un émetteur optique et au moins un récepteur optique (non représentés) couplés chacun à la liaison commune OL par le point I. Le concentrateur est par ailleurs prévu généralement pour permettre au réseau d'accès de communiquer avec d'autres réseaux d'accès et/ou avec un réseau d'interconnexion externe non représentés.

De même, chaque station ST1-ST3 est munie d'au moins un émetteur optique TX et d'au moins un récepteur optique RX couplés à la fibre associée F1-F3 par l'intermédiaire d'un noeud d'accès AN1-AN3 correspondant, dont un port externe constitue un des points d'émission (et de réception) K1-K3.

Dans le cas le plus simple, le concentrateur et les stations ne comportent chacun qu'un seul émetteur et qu'un seul récepteur. L'émetteur de chaque station utilisera alors une onde porteuse ayant une première longueur d'onde λu dite "montante", commune à toutes les stations, cette onde se propageant en direction du concentrateur, lequel comportera donc un récepteur apte à détecter cette longueur d'onde montante λu. De même, l'émetteur du concentrateur utilisera une onde porteuse ayant une seconde longueur d'onde λd dite "descendante", cette onde se propageant en direction des stations. Chaque station comportera donc un récepteur apte à détecter cette longueur d'onde descendante λd.

En pratique, les signaux échangés dans un tel réseau sont constitués de paquets, par exemple sous forme de trames Ethernet ou de cellules ATM. C'est le cas notamment des réseaux dits "EPON" et "APON" (respectivement pour "Ethernet Passive Optical Network et ATM Passive Optical Network").

Comme le montre la figure 1, les signaux montants émis par les stations ST1, ST2, ST3, référencés respectivement λu1, λu2, λu3, convergent au moyen du coupleur C vers l'extrémité J de la liaison commune OL. Ainsi, la longueur d'onde montante λu étant commune aux stations, il convient de prendre en compte le risque de collisions entre signaux montants, c'est-à-dire le fait que plusieurs signaux issus de plusieurs stations puissent arriver simultanément au niveau de l'extrémité J.

Pour cela, une première solution consiste à mettre en oeuvre un multiplexage temporel (habituellement appelé "TDMA" pour "Time Division Multiplexing Access") des signaux émis par les stations. Ainsi, des fenêtres temporelles disjointes successives sont allouées respectivement aux stations et chaque station ne peut procéder à une émission que pendant ses propres fenêtres temporelles qui définissent ainsi un canal temporel TDM.

Cette méthode suppose que les phases respectives d'émission des stations soient bien synchronisée. Cela nécessite des moyens précis de synchronisation communs à toutes les stations du réseau. Compte tenu du fait que les stations sont éloignées les unes des autre, la mise en oeuvre par des moyens électriques habituels est relativement délicate et coûteuse.

Par ailleurs, si on adopte la solution la plus simple consistant à prévoir des fenêtres temporelles prédéfinies, les évolutions des besoins respectifs en bande passante des stations sont totalement ignorées. Il en résulte généralement une utilisation non optimale des ressources du réseau.

On peut toutefois envisager la possibilité de modifier dynamiquement les durées des fenêtres attribuées respectivement aux stations, les modifications tenant compte de l'évolution des besoins instantanés respectifs des stations. Ceci implique une gestion centralisée du réseau qui, selon l'approche classique, prévoit un contrôleur de réseau et des moyens électriques permettant des échanges d'informations entre chaque station et le contrôleur. Ce cas est illustré sur la figure 1 par la présence du contrôleur 2 et de liaisons de contrôle symbolisées par des lignes en pointillés fléchées.

Cette dernière solution, décrite dans le document US 2003016692, est encore plus coûteuse que la solution précédente car elle implique que chaque station soit pourvue de moyens de contrôle adaptés tels que des circuits spécifiques de dialogue et de traitement.

Une autre possibilité pour traiter le problème des collisions consiste à utiliser le mécanisme désigné par le sigle "CSMA/CD" (pour "Carrier Sens Multiple Acces /Collision Detection"). Le principe de cette méthode est bien connu dans le domaine des réseaux à bus électrique commun à plusieurs stations. On rappellera simplement qu'elle consiste d'abord à prévoir dans chaque station des moyens de détection de collisions, c'est-à-dire de situations où, au cours d'une émission d'un paquet par la station, un signal concurrent est émis par une autre station. Si une telle collision est détectée par une station, l'émission du paquet en cours est interrompue. Ultérieurement, lorsque les moyens de détection indiquent la disparition de tout signal en cours d'émission par une autre station, une nouvelle tentative d'émission du même paquet pourra avoir lieu, après une certaine durée d'inhibition assurant que chaque station ait pu effectuer sa propre réinitialisation.

Ce principe est directement transposable aux réseaux optiques comportant un bus optique, c'est-à-dire une liaison optique le long de laquelle plusieurs stations sont couplées et peuvent émettre sur une même longueur d'onde.

Pour mettre en oeuvre cette méthode dans le contexte du réseau optique en arbre décrit précédemment, il faut d'abord prévoir une adaptation des liaisons de façon à aiguiller vers chaque station chaque signal émis par chacune des autres stations.

Ceci peut être réalisé comme le montre la figure 2. Pour un réseau ayant N stations, on utilise comme coupleur C un coupleur en étoile N vers 3 (avec N = 3 dans l'exemple représenté) ayant N ports d'entrée P1, P2, P3 reliés respectivement aux fibres F1, F2, F3 menant aux stations, et trois ports de sortie Q1, Q2, Q3. L'un des ports de sortie Q1 est couplé à l'extrémité J de la liaison commune OL, et les deux autres ports de sortie Q2, Q3 sont couplés entre eux par l'intermédiaire d'un isolateur IS. Ainsi, la combinaison λu (1, 2, 3) de signaux montants λu1, λu2, λu3 susceptibles d'être émis simultanément par les stations est réinjectée dans les fibres F1, F2, F3, dans le sens descendant.

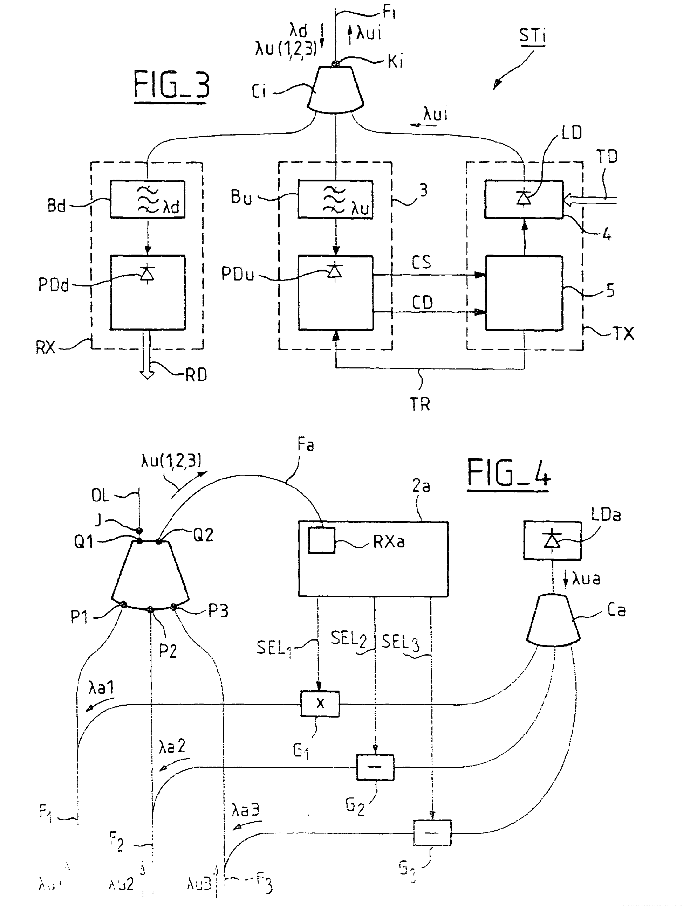

Des stations mettant en oeuvre le mécanisme de détection de signal et de collision sont connues en soi. On va toutefois rappeler schématiquement au moyen la figure 3 comment une telle station STi (avec i = 1, 2, 3) peut être réalisée.

Le noeud d'accès au réseau est constitué d'un dispositif de couplage réalisant la fonction 1 vers 3, simplement représenté ici par un coupleur Ci. Un premier port du coupleur est couplé à la fibre associée Fi (avec i = 1, 2, 3) et constitue le point d'émission Ki de la station. L'un des trois autres ports opposés au premier est relié au récepteur RX, le second à un dispositif de détection de collision 3 et le troisième à l'émetteur TX.

Le récepteur RX est sensible à la longueur d'onde descendante λd par exemple au moyen d'un filtre Bd sélectionnant λd suivi d'un photodétecteur PDd et de circuits électroniques (non représentés en détail) qui délivrent sous forme électrique les données reçues correspondantes RD.

L'émetteur TX comporte un dispositif d'émission 4 pour mémoriser les données à émettre TD et les convertir sous forme optique. Le dispositif 4 comporte en particulier une source laser accordé sur la longueur d'onde montante λu et des moyens de modulation (non représentés en détail). L'émetteur TX comporte en outre des moyens de contrôle d'émission 5 pour commander l'activation du dispositif d'émission 4 et dialoguer avec le dispositif de détection de collision 3.

Le dispositif de détection de collision 3 comporte un récepteur sensible à la longueur d'onde montante λu (par exemple au moyen d'un filtre Bu sélectionnant λu suivi d'un photodétecteur PDu). En prenant en compte le niveau de puissance optique reçue à la longueur d'onde montante λu et l'état d'activité de l'émetteur TX (signal TR fourni par les moyens de contrôle d'émission 5), le dispositif 3 peut détecter les situations de collision, c'est-à-dire la présence au point d'émission Ki d'une onde optique ayant la longueur d'onde montante et qui n'est pas issue de l'émetteur de la station. Si une collision se produit, le dispositif 3 le notifie aux moyens de contrôle d'émission 5 de l'émetteur (signal CD). Dans ce cas, une nouvelle tentative d'émission des données ayant subi la collision sera effectuée ultérieurement.

Le dispositif de détection de collision 3 détermine aussi si aucun signal se propageant selon le sens descendant et ayant la longueur d'onde montante λu n'est présent sur la fibre, et le notifie aux moyens de contrôle d'émission 5 de l'émetteur (signal CS), ce qui indique à l'émetteur s'il est autorisé ou non à émettre. Le dispositif de détection 3 associé aux moyens de contrôle d'émission 5 constitue ainsi un dispositif de gestion des collisions de type CSMA/CD standard.

Par rapport à la méthode décrite précédemment utilisant le multiplexage temporel, la solution CSMA/CD présente l'avantage d'être totalement décentralisée. Toutefois, du fait de son principe même, cette technique est peu performante en termes de capacité globale de trafic dans le réseau. En outre, les besoins respectifs en bande passante des stations ne peuvent pas être pris en compte et l'utilisation des ressources du réseau n'est pas optimale.

L'invention à pour but de proposer une autre solution qui ne présente pas les inconvénients des méthodes qui viennent d'être exposées. Pour cela, elle vise à mettre en oeuvre une gestion centralisée des autorisations d'émissions respectives des stations qui soit simple et peu coûteuse.

Dans ce but, l'invention a pour objet un réseau de transmission optique comprenant un concentrateur, une pluralité de stations et un arbre d'interconnexion optique reliant des points d'émission respectifs des stations à un même point de réception du concentrateur, ledit arbre d'interconnexion comportant une liaison commune ayant une première extrémité couplée audit point de réception et une seconde extrémité couplée à chacun desdits points d'émission des stations par l'intermédiaire d'un dispositif de couplage et de liaisons d'accès associées respectivement aux stations, chaque liaison d'accès étant une liaison point à point reliant le dispositif de couplage au point d'émission d'une seule station et permettant la propagation d'ondes optiques de la station vers le dispositif de couplage selon un sens de propagation dit "montant", ou dans le sens opposé selon un sens de propagation dit "descendant", lesdites stations étant munies d'émetteurs aptes à émettre par leurs points d'émission respectifs des signaux optiques portés chacun par une même longueur d'onde dite "montante" et se propageant selon ledit sens de propagation montant, chaque station comportant un dispositif de détection de porteuse sensible à la présence au point d'émission d'une onde optique ayant ladite longueur d'onde montante et qui n'est pas issue de l'émetteur de la station, ledit dispositif de détection coopérant avec des moyens de contrôle d'émission pour inactiver ledit émetteur si une telle présence est détectée,
ledit réseau étant caractérisé en ce qu'il comporte :
- un dispositif émulateur apte à émettre des ondes auxiliaires ayant ladite longueur d'onde montante et à les coupler dans lesdites liaisons d'accès pour qu'elles se propagent selon ledit sens de propagation descendant, et
- un dispositif de commande dudit dispositif émulateur pour activer sélectivement les émissions desdites ondes auxiliaires.
   L'avantage de cette disposition est qu'elle permet en particulier la mise en oeuvre d'un fonctionnement analogue au multiplexage temporelle sans nécessiter l'ajout vers les stations de longues liaisons de synchronisation et/ou de contrôle. Optionnellement, par un mode de fonctionnement approprié du dispositif de commande et en prévoyant des récepteurs optiques adaptés dans les stations, le même dispositif émulateur peut servir en outre pour envoyer aux stations des signaux de test ou de signalisation pour la gestion du réseau.
   Dans son application principale de multiplexage temporelle selon l'invention, l'attribution des périodes d'émission respectives des stations peut être effectuée de façon particulièrement simple. D'une façon générale, elle seront choisies de façon à prévenir les collisions entre signaux montants. Pour cela, le dispositif de commande sera prévu pour activer des émissions d'ondes auxiliaires dans les liaisons d'accès de sorte qu'à chaque instant au plus un signal émis par une seule des stations puisse atteindre la seconde extrémité de la liaison commune.
   Ces périodes dépendront en fait du contexte d'exploitation du réseau et pourront être modifiées dynamiquement. Ainsi, selon une première possibilité, le dispositif de commande est prévu pour autoriser les stations à émettre à tour de rôle pendant des durées prédéterminées.
   Selon une autre possibilité, le dispositif de commande est prévu pour autoriser les stations à émettre pendant des durées respectives fonction de leurs besoins respectifs de débits d'émission.
   Dans un aspect de mise en oeuvre conforme à l'invention, le dispositif émulateur comporte une source d'onde optique de commande ayant ladite longueur d'onde montante, ladite source d'onde optique de commande étant couplée respectivement auxdites liaisons d'accès par l'intermédiaire de portes optiques commandées respectivement par ledit dispositif de commande.
   On peut noter que l'invention n'exige pas de développer dans les stations des dispositifs spécifiques. En effet, et selon un autre aspect de mise en oeuvre conforme à l'invention, il est avantageux que chaque station soit une station munie d'un dispositif standard de gestion des collisions de type CSMA/CD, lequel peut servir directement de dispositif de détection de porteuse et de moyens de contrôle d'émission. En effet, l'invention permettant d'éviter les collisions, les moyens spécifiques pour détecter des collisions sont a priori inutiles. Néanmoins, le marché des stations CSMA/CD courantes étant important, leur prix est bien inférieur à celui de stations qui seraient développées spécifiquement.
   Il est intéressant de remarquer que la mise en oeuvre de l'invention peut aussi s'effectuer à partir d'un réseau installé, conforme au standard CSMA/CD, en y insérant simplement le dispositif émulateur, sans devoir modifier les stations de ce réseau.
   D'autres aspects et avantages de l'invention apparaîtront dans la suite de la description en référence aux figures.
- La figure 1 commentée précédemment représente un exemple de réseau d'accès métropolitain auquel l'invention peut s'appliquer.
- La figure 2 commentée précédemment représente un détail pour la mise en oeuvre dans le réseau de la figure 1 d'un mécanisme de type CSMA/CD.
- La figure 3 commentée précédemment représente schématiquement une station comportant un dispositif standard de détection de collision du type CSMA/CD et pouvant être utilisé dans le réseau selon l'invention.
- La figure 4 illustre schématiquement un exemple de mise en oeuvre de l'invention.

Compte tenu des explications qui précèdent, la mise en oeuvre pratique de l'invention ne pose pas de difficultés particulières. Outre l'utilisation de stations STi comportant un dispositif de détection de porteuse, telle que décrites à la figure 3, elle consiste essentiellement à réaliser un dispositif émulateur et son dispositif de commande. Ces éléments sont représentés schématiquement sur la figure 4.

On retrouve sur la figure les liaisons d'accès F1-F3, la liaison commune OL et le coupleur C déjà décrits précédemment.

Le dispositif émulateur comporte une source LDa pour fournir un onde optique de commande λua ayant la longueur d'onde montante λu. Cette source LDa (typiquement une diode laser à émission continue) est couplée (par exemple par un coupleur en étoile Ca) respectivement aux liaisons d'accès F1-F3 par l'intermédiaire de portes optiques G1-G3. Ce couplage est bien sûr tel que les ondes λa1, λa2, λa3 prélevées de l'onde de commande λua à l'aide du coupleur Ca et des portes G1-G3 puisse se propager dans les liaisons d'accès dans le sens descendant.

Les portes optiques G1-G3 sont commandées par le dispositif de commande 2a prévu pour leur appliquer respectivement des tensions de commandes appropriées SEL1-SEL3. Ainsi, ces commandes vont contrôler sélectivement les émissions d'ondes auxiliaires λa1, λa2, λa3 par les ports de sortie des portes, et par conséquent leurs propagations respectives dans les liaisons d'accès F1, F2, F3.

Les instants d'activation et de désactivation des portes vont donc conditionner les périodes d'émissions des ondes auxiliaires et par conséquent les périodes durant lesquelles les stations seront autorisées à émettre.

Le but du dispositif étant d'éviter les collisions entre signaux montants, ces instants doivent satisfaire la condition qu'à tout instant au plus un signal émis par une seule des stations puisse atteindre la seconde extrémité J de la liaison commune.

Dans l'hypothèse où les temps de propagation optique respectifs depuis les stations ST1-ST3 jusqu'au coupleur C sont pratiquement identiques, de même que les temps de propagation depuis les portes G1-G3 jusqu'aux stations, la condition précédente se résume à devoir activer toutes les portes optiques à l'exception d'une seule qui correspond à la station autorisée à émettre.

En toute rigueur, des différences de temps de propagation existent, mais elles sont généralement très faibles. Pour en tenir compte, une possibilité consiste à prévoir avant toute désactivation d'une porte une phase d'inhibition où toutes les portes sont activées, cette phase ayant une durée suffisante appropriée, par exemple au moins égale à l'écart maximale entre les temps de propagation correspondant aux différents trajets menant respectivement du coupleur Ca aux différentes stations puis respectivement des stations au coupleur C.

Selon une autre possibilité, dans l'émetteur de chaque station on peut prévoir que le temps de garde séparant la disparition de l'onde auxiliaire et le début effectif d'une émission soit au moins égale à cet écart maximale.

Si on veut réduire au minimum la durée de la phase d'inhibition ou du temps de garde, on peut toujours égaliser les différents trajets définis ci-dessus, par exemple au moyen de lignes à retard calibrées et insérées dans les liaisons entre le coupleur Ca et les portes G1-G3. On peut aussi compenser les différences de temps de propagation en décalant en conséquence les instants d'activation et de désactivation respectifs des portes.

Concernant les périodes respectives d'autorisation d'émission par les stations, plusieurs possibilités sont envisageables.

Le dispositif de commande 2a peut être prévu pour autoriser les stations à émettre à tour de rôle pendant des durées prédéterminées.

En variante, le dispositif de commande peut aussi autoriser les stations à émettre pendant des durées respectives fonction de leurs besoins respectifs de débits d'émission. Ces besoins peuvent être établis statistiquement et/ou en fonction de niveaux de privilèges préétablis accordés aux différentes stations, par exemple par un système de classes de qualité de service.

Pour exploiter au mieux la bande passante du réseau, il est préférable de pouvoir adapter dynamiquement les durées d'autorisation d'émission respectives des stations en fonction de leurs besoins respectifs évalués en temps réel.

Pour cela, selon un aspect de réalisation conforme à l'invention, il est prévu un détecteur d'activité pour mesurer la puissance optique d'ondes ayant la longueur d'onde montante λu et se propageant dans la liaison commune OL dans le sens montant. L'autorisation d'émission d'une station sera interrompue si cette puissance ainsi mesurée indique une absence d'émission pendant une durée déterminée.

Cette disposition permet de réduire la probabilité d'autoriser une station à émettre alors qu'elle n'en a pas besoin à l'instant considéré.

Le détecteur d'activité coopère avec le dispositif de commande 2a et peut être simplement constitué d'un récepteur optique du concentrateur qui est sensible à ladite longueur d'onde montante λu et est couplé audit point de réception I. Avec cette réalisation non représentée sur les figures, le seul élément de réseau à ajouter est une liaison entre le concentrateur et le dispositif de commande 2a.

Etant donné que pour le type de réseau concerné, la distance entre le concentrateur et le dispositif de commande peut être relativement importante (par exemple 20 km) alors que le dispositif de commande 2a est normalement au voisinage du dispositif de couplage C, les problèmes de liaison seront simplifiés si le détecteur d'activité se trouve lui-même au voisinage du dispositif de couplage C. Pour cela, on prévoira plutôt un détecteur d'activité comportant un récepteur optique de contrôle spécifique RXa, sensible à la longueur d'onde montante λu et couplé en un point du dispositif de couplage C où convergent tous les signaux issus des émetteurs des stations.

Plus précisément, la mise en oeuvre est par exemple telle que représentée sur la figure 4. Le dispositif de couplage (coupleur C) comporte une pluralité de ports d'entrée P1-P3 reliés respectivement aux liaisons d'accès F1-F3, et des premier et second ports de sortie Q1, Q2. Le premier port de sortie Q1 est relié à la seconde extrémité J de la liaison commune OL et le second port de sortie Q2 est couplé au récepteur optique de contrôle RXa. Comme représenté, le récepteur de contrôle fera normalement partie du dispositif de commande 2a.

L'invention n'est pas limitée aux seuls modes de réalisation décrits ci-dessus. En particulier, elle concerne aussi les réseaux WDM. Il suffit pour cela d'appliquer les moyens décrits précédemment à chacune des longueurs d'onde prévues.

Bien entendu, l'invention peut s'appliquer aussi bien à des réseaux passifs qu'à des réseaux ayant des liaisons munies d'amplificateurs.

## Revendications

1. Réseau de transmission optique comprenant un concentrateur (1), une pluralité de stations (ST1-ST3) et un arbre d'interconnexion optique reliant des points d'émission (K1-K3, Ki) respectifs des stations à un même point de réception (I) du concentrateur, ledit arbre d'interconnexion comportant une liaison commune (OL) ayant une première extrémité couplée audit point de réception (I) et une seconde extrémité (J) couplée à chacun desdits points d'émission (K1-K3, Ki) des stations par l'intermédiaire d'un dispositif de couplage (C) et de liaisons d'accès (F1-F3) associées respectivement aux stations, chaque liaison d'accès étant une liaison point à point reliant le dispositif de couplage (C) au point d'émission d'une seule station et permettant la propagation d'ondes optiques de la station vers le dispositif de couplage (C) selon un sens de propagation dit "montant", ou dans le sens opposé selon un sens de propagation dit "descendant", lesdites stations étant munies d'émetteurs aptes à émettre par leurs points d'émission respectifs (K1-K3, Ki) des signaux optiques (λu1, λu2, λu3) portés chacun par une même longueur d'onde (λu) dite "montante" et se propageant selon ledit sens de propagation montant, chaque station (STi) comportant un dispositif de détection de porteuse (3) sensible à la présence au point d'émission (Ki) d'une onde optique ayant ladite longueur d'onde montante (λu) et qui n'est pas issue de l'émetteur de la station, ledit dispositif de détection (3) coopérant avec des moyens de contrôle d'émission (5) pour inactiver ledit émetteur si une telle présence est détectée,
ledit réseau étant **caractérisé en ce qu'**il comporte :
- un dispositif émulateur (LDa, Ca, G1-G3)) apte à émettre des ondes auxiliaires (λa1, λa2, λa3) ayant ladite longueur d'onde montante (λu) et à les coupler dans lesdites liaisons d'accès (F1-F3) pour qu'elles se propagent selon ledit sens de propagation descendant, et
- un dispositif de commande (2a) dudit dispositif émulateur pour activer sélectivement les émissions desdites ondes auxiliaires.

2. Réseau selon la revendication 1, **caractérisé en ce que** ledit dispositif émulateur comporte une source (LDa) d'onde optique de commande (λua) ayant ladite longueur d'onde montante (λu), ladite source d'onde optique de commande étant couplée (Ca) respectivement auxdites liaisons d'accès (F1-F3) par l'intermédiaire de portes optiques (G1-G3) commandées respectivement (SEL1-SEL3) par ledit dispositif de commande (2a).

3. Réseau selon l'une des revendications 1 ou 2, **caractérisé en ce que** ledit dispositif de commande (2a) est prévu pour activer des émissions d'ondes auxiliaires (λa1, λa2, λa3) dans les liaisons d'accès (F1-F3) de sorte qu'à chaque instant au plus un signal (λu1, λu2, λu3) émis par une seule des stations puisse atteindre ladite seconde extrémité (J) de la liaison commune (OL).

4. Réseau selon la revendication 3, **caractérisé en ce que** le dispositif de commande (2a) est prévu pour autoriser les stations à émettre à tour de rôle pendant des durées prédéterminées.

5. Réseau selon la revendication 3, **caractérisé en ce que** le dispositif de commande (2a) est prévu pour autoriser les stations à émettre pendant des durées respectives fonction de leurs besoins respectifs de débits d'émission.

6. Réseau selon la revendication 5, **caractérisé en ce qu**'il comporte un détecteur d'activité (RXa) pour mesurer la puissance optique d'ondes ayant ladite longueur d'onde montante (λu) et se propageant dans la liaison commune (OL) dans le sens montant, et en ce que l'autorisation d'émission d'une station est interrompue si la puissance mesurée indique une absence d'émission pendant une durée déterminée.

7. Réseau selon la revendication 6, **caractérisé en ce que** ledit détecteur d'activité est constitué d'un récepteur optique du concentrateur qui est sensible à ladite longueur d'onde montante (λu) et est couplé audit point de réception (I) .

8. Réseau selon la revendication 6, **caractérisé en ce que** ledit détecteur d'activité comporte un récepteur optique de contrôle (RXa) sensible à ladite longueur d'onde montante (λu) et couplé en un point (Q2) dudit dispositif de couplage (C) où convergent tous les signaux issus desdits émetteurs des stations.

9. Réseau selon la revendication 8, **caractérisé en ce que** ledit dispositif de couplage (C) comporte une pluralité de ports d'entrée (P1-P3) reliés respectivement auxdites liaisons d'accès (F1-F3), et des premier et second ports de sortie (Q1, Q2), ledit premier port de sortie (Q1) étant relié à ladite seconde extrémité (J) de la liaison commune (OL), ledit second port de sortie (Q2) étant couplé audit récepteur optique de contrôle (RXa).

10. Réseau selon l'une des revendications 1 ou 2, **caractérisé en ce que** chaque station est munie d'un dispositif de gestion des collisions de type CSMA/CD servant de dispositif de détection de porteuse (3) et de moyens de contrôle d'émission (5).

## Claims

1. An optical transmission network comprising a concentrator (1), a plurality of stations (ST1-ST3), and an optical interconnection tree linking respective sending points (K1-K3, Ki) of the stations to the same receiving point (I) of the concentrator, said interconnection tree including a common optical link (OL) having a first end coupled to said receiving point (I) and a second end (J) coupled to each of said sending points (K1-K3, Ki) of the stations via a coupling system (C) and access links (F1-F3) associated with the respective stations, each access link being a point-to-point link connecting the coupling system (C) to the sending point of a single station and enabling the propagation of optical waves from the station to the coupling system (C) in an "uplink" propagation direction or in an opposite "downlink" propagation direction, said stations including senders adapted to send from their respective sending points (K1-K3, Ki) optical signals (λu1, λu2, λu3) each carried by the same "uplink" wavelength (λu) and propagating in said uplink propagation direction, each station (STi) including a carrier detection system (3) able to detect the presence at the sending point (Ki) of an optical wave at said uplink wavelength (λu) that did not come from the sender of the same station, and said detection system (3) cooperating with sending control means (5) to inactivate said sender if such presence is detected,
said network being **characterized in that** it includes:
- an emulator (LDa, Ca, G1-G3) adapted to send auxiliary waves (λa1, λa2, λa3) at said uplink wavelength (λu) and to couple them into said access links (F1-F3) so that they propagate in said downlink propagation direction, and
· a control system (2a) of said emulator for selectively activating the sending of said auxiliary waves.

2. A network according to claim 1, **characterized in that** said emulator includes a source (LDa) of an optical control wave (λua) at said uplink wavelength (λu), said optical control wave source being coupled (Ca) to said access links (F1-F3) by respective optical gates (G1-G3) respectively controlled (SEL1-SEL3) by said control system (2a).

3. A network according to claim 1 or claim 2, **characterized in that** said control system (2a) is adapted to activate sending of auxiliary waves (λa1, λa2, λa3) in the access links (F1-F3) so that at most one signal (λu1, λu2, λu3) sent by a single station can reach said second end (J) of the common optical link (OL) at any time.

4. A network according to claim 3, **characterized in that** the control system (2a) is adapted to authorize the stations to send in turn during predetermined time periods.

5. A network according to claim 3, **characterized in that** the control system (2a) is adapted to authorize the stations to send during respective time periods as a function of their respective bit rate requirements.

6. A network according to claim 5, **characterized in that** it includes an activity detector (RXa) for measuring the optical power of waves at said uplink wavelength (λu) propagating in the common optical link (OL) in the uplink direction and the authorization of a station to send is interrupted if the measured power indicates absence of sending for a particular time period.

7. A network according to claim 6, **characterized in that** it includes an activity detector comprising an optical receiver in the concentrator that is able to detect said uplink wavelength (λu) and is coupled to said receiving point (I).

8. A network according to claim 6, **characterized in that** said activity detector includes an optical control receiver (RXa) that is able to detect said uplink wavelength (λu) and is coupled to a point (Q2) of said coupling system (C) at which all the signals from said senders of the stations converge.

9. A network according to claim 8, **characterized in that** said coupling system (C) includes a plurality of input ports (P1-P3) connected to respective access links (F1-F3) and first and second output ports (Q1-Q2), said first output port (Q1) is connected to said second end (J) of the common optical link (OL) and said second output port (Q2) is coupled to said optical control receiver (RXa).

10. A network according to claim 1 or claim 2, **characterized in that** each station is provided with a CSMA/CD type collision management system providing the carrier detection system (3) and the sending control means (5).

## Patentansprüche

1. Optisches Übertragungsnetz, umfassend einen Konzentrator (1), eine Vielzahl von Stationen (ST1-ST3) und einen optischen Verbindungsbaum, welcher die jeweiligen Sendepunkte (K1-K3, Ki) der Stationen mit demselben Empfangspunkt (i) des Konzentrators verbindet, wobei der Verbindungsbaum eine gemeinsame Verbindung (OL) umfasst, die ein erstes mit dem Empfangspunkt (I) gekoppeltes Ende und ein zweites mit jedem der Sendepunkte (K1-K3, Ki) der Stationen gekoppeltes Ende (J) aufweist, und zwar über eine Kopplungsvorrichtung (C) und jeweils den Stationen zugeordnete Zugangsverbindungen (F1-F3), wobei jede Zugangsverbindung eine Punkt-zu-Punkt-Verbindung ist, welche die Kopplungsvorrichtung (C) mit dem Sendepunkt einer einzigen Station verbindet und die die Ausbreitung optischer Wellen von der Station zur Kopplungsvorrichtung (C) in einer als "Upstream" bezeichneten Ausbreitungsrichtung oder in entgegengesetzter Richtung in einer als "Downstream" bezeichneten Ausbreitungsrichtung ermöglicht, wobei die Stationen mit Sendern ausgestattet sind, die dazu geeignet sind, über ihre jeweiligen Sendepunkte (K1-K3, Ki) optische Signale (λu1, λu2, λu3) zu senden, von denen jedes von derselben so genannten "Upstream"-Wellenlänge (λu) getragen wird und sich in der Upstream-Ausbreitungsrichtung ausbreitet, wobei jede Station (STi) eine Trägerwellen-Erkennungsvorrichtung (3) umfasst, die empfindlich ist in Bezug auf das Vorhandensein einer optischen Welle mit dieser Upstream-Wellenlänge (λu), die nicht vom Sender der Station ausgegangen ist, wobei die Erkennungsvorrichtung (3) mit Sendeüberwachungsmitteln (5) kooperiert, um den Sender inaktiv zu machen, wenn ein solches Vorhandensein erkannt wird;
wobei das Netz **dadurch gekennzeichnet ist, dass** es umfasst:
- eine Emulatorvorrichtung (LDa, Ca, G1-G3), die dazu geeignet ist, Hilfswellen (λa1, λa2, λa3) zu senden, welche die Upstream-Wellenlänge (λu) aufweisen, und sie in die Zugangsverbindungen (F1-F3) einzukoppeln, damit sie sich in der Downstream-Ausbreitungsrichtung ausbreiten; und
- eine Steuerungsvorrichtung (2a) der Emulatorvorrichtung, um die Sendevorgänge der Hilfswellen selektiv zu aktivieren.

2. Netz nach Anspruch 1, **dadurch gekennzeichnet, dass** die Emulatorvorrichtung eine Quelle (LDa) für eine optische Steuerungswelle (λua) umfasst, welche die Upstream-Wellenlänge (λu) aufweist, wobei die Quelle der optischen Steuerungswelle mit den Zugangsverbindungen (F1-F3) jeweils über optische Tore (G1-G3) gekoppelt (Ca) ist, die jeweils (SEL1-SEL3) von der Steuerungsvorrichtung (2a) gesteuert werden.

3. Netz nach einem der Ansprüche 1 oder 2, **dadurch gekennzeichnet, dass** die Steuerungsvorrichtung (2a) dafür vorgesehen ist, Sendevorgänge von Hilfswellen (λa1, λa2, λa3) in den Zugangsverbindungen (F1-F3) so zu aktivieren, dass zu jedem Zeitpunkt höchstens ein von einer einzelnen der Stationen gesendetes Signal (λu1, λu2, λu3) das zweite Ende (J) der gemeinsamen Verbindung (OL) erreichen kann.

4. Netz nach Anspruch 3, **dadurch gekennzeichnet, dass** die Steuerungsvorrichtung (2a) dafür vorgesehen ist, den Stationen die Genehmigung zu erteilen, dass sie reihum während einer jeweils zuvor festgelegten Dauer senden.

5. Netz nach Anspruch 3, **dadurch gekennzeichnet, dass** die Steuerungsvorrichtung (2a) dafür vorgesehen ist, den Stationen die Genehmigung zu erteilen, dass sie während einer jeweiligen Dauer senden, die von ihrem jeweiligen Senderatenbedarf abhängt.

6. Netz nach Anspruch 5, **dadurch gekennzeichnet, dass** es einen Aktivitätsdetektor (RXa) umfasst, um die optische Leistung von Wellen zu messen, welche die Upstream-Wellenlänge (λu) aufweisen und die sich in der gemeinsamen Verbindung (OL) in Upstream-Richtung ausbreiten, sowie **dadurch**, dass die Sendegenehmigung einer Station unterbrochen wird, wenn die gemessene Leistung das Fehlen eines Sendevorgangs während einer bestimmten Dauer anzeigt.

7. Netz nach Anspruch 6, **dadurch gekennzeichnet, dass** der Aktivitätsdetektor aus einem optischen Empfänger des Konzentrators besteht, der in Bezug auf die Upstream-Wellenlänge (λu) empfindlich ist und der mit dem Empfangspunkt (I) gekoppelt ist.

8. Netz nach Anspruch 6, **dadurch gekennzeichnet, dass** der Aktivitätsdetektor einen optischen Empfänger für Überwachungszwecke (RXa) umfasst, der in Bezug auf die Upstream-Wellenlänge (λu) empfindlich ist und der in einem Punkt (Q2) der Kopplungsvorrichtung (C) gekoppelt ist, an dem alle von den Sendern der Stationen ausgegangenen Signale zusammenlaufen.

9. Netz nach Anspruch 8, **dadurch gekennzeichnet, dass** die Kopplungsvorrichtung (C) eine Vielzahl von Eingangsanschlüssen (P1-P3) umfasst, die jeweils mit den Zugangsverbindungen (F1-F3) verbunden sind, sowie einen ersten und zweiten Ausgangsanschluss (Q1, Q2), wobei der erste Ausgangsanschluss (Q1) mit dem zweiten Ende (J) der gemeinsamen Verbindung (OL) verbunden ist und der zweite Ausgangsanschluss (Q2) mit dem optischen Empfänger für Überwachungszwecke (RXa) gekoppelt ist.

10. Netz nach einem der Ansprüche 1 oder 2, **dadurch gekennzeichnet, dass** jede Station mit einer Vorrichtung zum Kollisionsmanagement des Typs CSMA/CD ausgestattet ist, welche als Trägerwellenerkennungsvorrichtung (3) und Sendeüberwachungsmittel (5) dient.
